# EUROPÄISCHE PATENTANMELDUNG

(11) **EP 3 381 735 A1**
(43) Veröffentlichungstag der Anmeldung: **03.10.2018**
(21) Anmeldenummer: 18163262.1
(22) Anmeldetag: 22.03.2018
(51) Int. Cl.: B60L 11/18

(54) **VERFAHREN ZUR KOORDINATION VON LADEVORGÄNGEN VON ELEKTROFAHRZEUGEN, SOWIE ELEKTRISCH BETRIEBENES KRAFTFAHRZEUG UND VERSORGUNGSFAHRZEUG**

(30) Priorität: 28.03.2017 DE 102017205234
(71) Anmelder: AUDI AG, 85045 Ingolstadt (DE)
(72) Erfinder: Scherer, Christopher, 92318 Neumarkt (DE)

(57) **Zusammenfassung**

Die Erfindung betrifft ein Verfahren zur Koordination von Ladevorgängen von Elektrofahrzeugen, welches dadurch gekennzeichnet ist, dass ein jeweiliges Angebotssignal (S1), umfassend zumindest Daten über eine bereitgestellte Energiemenge und eine aktuelle geografische Position, von mobilen Versorgereinheiten (1) an einen Zentralrechner (2) übertragen wird (P1) und ein jeweiliges Nachfragesignal S2, umfassend zumindest Daten über eine angeforderte Energiemenge und eine aktuelle geografische Position, von mobilen Bezugseinheiten (3) an den Zentralrechner übertragen wird (P2). Zumindest auf Grundlage der Angebotssignale (S1) und der Nachfragesignale (S2) werden mögliche Kombinationen, bestehend aus jeweils einer Versorgereinheit (1) und einer Bezugseinheit (3), zusammen mit einem jeweiligen Bewertungswert durch den Zentralrechner (2) erstellt (P3). Unter Einbeziehung des Bewertungswertes werden mittels einer Optimierungsmethode bestimmte Kombinationen ausgewählt (P4) und an die jeweiligen Versorgereinheiten (1) und die jeweiligen Bezugseinheiten (3) der ausgewählten Kombinationen mittels eines Koordinationssignals (S3) ihre jeweilige ausgewählte Kombination und Daten bezüglich eines Energietransfervorgangs übertragen (P5).

## Beschreibung

Die Erfindung betrifft ein Verfahren zur Koordination von Ladevorgängen von Elektrofahrzeugen, sowie ein elektrisch betriebenes Kraftfahrzeug und ein Versorgungsfahrzeug

Elektrisch betriebene Kraftfahrzeuge haben nach dem aktuellen Stand der Technik eine Reichweite von maximal 500 km pro Akkuladung, was deutlich über den im Alltag benötigten Fahrstrecken liegt. Für Fahrstrecken, welche die maximale Reichweite einer Akkuladung übersteigen, ist es notwendig, einen Ladevorgang durchzuführen. Für diese Problematik bestehen zwei Lösungsansätze. Ein erster Ansatz sieht vor, dass eine Fahrt unterbrochen wird, um einen Ladevorgang an einer stationären Ladestation durchzuführen. Solche Ladestationen befinden sich dabei primär in unmittelbarer Nähe von Autobahnen, beispielsweise auf Parkplätzen oder Raststätten. Bevorzugter Weise erfolgt ein Ladevorgang dabei mittels der Anwendung einer Technologie des schnellen Ladens, womit aktuell Ladeleistungen von bis zu 130 kW erreicht werden können. Damit kann beispielsweise ein Energiespeicher mit einer Energiespeichermenge von 90 kWh innerhalb von 30 Minuten auf 80 % geladen werden. Mittels dieser Technologie kann die Dauer einer Fahrtunterbrechung auf ein für den Fahrer akzeptables Maß reduziert werden. Andere Konzepte sehen ein induktives Aufladen von elektrisch angetriebenen Kraftfahrzeugen während der Fahrt vor. Dabei ist es vorgesehen, dass Teile des Straßennetzes mit Vorrichtungen zur Durchführung induktiver Ladevorgänge ausgestattet werden, wodurch es ermöglicht wird, ein elektrisch angetriebenes Kraftfahrzeug während der Fahrt über eine in der Straße integrierte Vorrichtung zu laden. Für einen flächendeckenden Einsatz dieser Technik ist es jedoch erforderlich große Teile des Straßennetzes mit Ladevorrichtungen auszustatten.

Ein Verfahren, welches ein mobiles Aufladen eines elektrischen Energiespeichers eines Kraftfahrzeugs ermöglicht, ist in der DE 10 2013 206 903 A1 beschrieben. Das Verfahren umfasst ein Anfordern eines mobilen Aufladens für ein Kraftfahrzeug, wobei ein Treffpunkt für das Kraftfahrzeug und ein Servicefahrzeug basierend auf der Position und der Restreichweite des Kraftfahrzeugs bestimmt wird und elektrische Energie von dem Servicefahrzeug an das Kraftfahrzeug übertragen wird.

In der DE 10 2010 055 102 A1 ist ein Verfahren zum Aufladen einer Traktionsbatterie eines Elektrofahrzeugs beschrieben. Dabei ist es vorgesehen, dass ein Elektrofahrzeug im laufenden Verkehr mit einem Zugfahrzeug mechanisch gekoppelt wird, wobei in einer Ausführung elektrische Energie vom Zugfahrzeug mittels einer elektrischen Kopplung an das Elektrofahrzeug übertragen wird.

In der DE 10 2015 205 811 A1 wird eine Range-Extender-Fahrzeug und dessen Verwendung beschrieben. Das Range-Extender-Fahrzeug weist dabei Mittel zum autonomen Fahren auf und Empfangsmittel zur Entgegennahme von Informationen zum Auffinden des zu ladenden Hauptfahrzeugs.

In der DE 10 2009 028 565 A1 sind eine Vorrichtung zum Laden elektrisch angetriebener Fahrzeuge zusammen mit einen Verfahren zum Betreiben der Vorrichtung beschrieben. Die Vorrichtung ermöglicht es, elektrische Energie zwischen zwei Fahrzeugen während der Fahrt auszutauschen. Dabei sieht eine Weiterbildung vor, dass mittels einer Einheit zur drahtlosen Datenübertragung ein Energieüberschuss oder ein Energiebedarf mitgeteilt werden kann. Die Mitteilung kann direkt an ein weiteres Fahrzeug oder eine Ladestation übertragen werden. Dabei ist es auch möglich, einen Preis oder eine Preisspanne durch den Fahrer festzulegen.

Nachteilig am Stand der Technik ist die Tatsache, dass die darin beschriebenen Schritte zur Koordination zwischen Energielieferanten und Energieempfängern für vereinzelte oder lokale Zusammenführungen ausgelegt sind. Eine Koordination und langfristige Zusammenführung mehrerer Energielieferanten mit mehreren Energieempfängern wird nicht explizit beschrieben.

Es ist eine Aufgabe der vorliegenden Erfindung, ein Verfahren bereitzustellen, welches die Zusammenführung einer Mehrzahl von mobilen Energieempfängern und mobilen Energieversorgern optimiert.

Die Aufgabe wird durch die Gegenstände der unabhängigen Patentansprüche gelöst. Vorteilhafte Weiterbildungen der Erfindung ergeben sich durch die Merkmale der abhängigen Patentansprüche, die folgende Beschreibung sowie die Figuren.

Durch die Erfindung ist ein Verfahren zur Koordination von Ladevorgängen von Elektrofahrzeugen bereitgestellt. Dieses Verfahren ist dadurch gekennzeichnet, dass ein jeweiliges Angebotssignal, umfassend zumindest Daten über eine bereitgestellte Energiemenge und eine aktuelle geographische Position, von mobilen Versorgereinheiten an einen Zentralrechner übertragen wird und ein jeweiliges Nachfragesignal, umfassend zumindest Daten über eine angeforderte Energiemenge und eine aktuelle geographische Position, von mobilen Bezugseinheiten an den Zentralrechner übertragen wird. Zumindest auf Grundlage der Angebotssignale und der Nachfragesignale werden durch den Zentralrechner möglich Kombinationen, bestehend aus jeweils einer Versorgereinheit und einer Bezugseinheit zusammen mit einem jeweiligen Bewertungswert erstellt. In einem nächsten Schritt werden Kombinationen unter Einbeziehung des Bewertungswertes mittels einer Optimierungsmethode ausgewählt und den jeweiligen Versorgereinheiten und den jeweiligen Bezugseinheiten der ausgewählten Kombinationen werden jeweilige Koordinationssignale übermittelt, welche die betreffende Kombination und Daten zur Durchführung eines Energietransfers umfassen. In einem letzten Schritt leiten die jeweiligen Versorgereinheiten und die jeweiligen Bezugseinheiten einen Energietransfervorgang gemäß der ausgewählten Kombination ein.

Bei einer mobilen Versorgereinheit kann es sich beispielsweise um ein elektrisch angetriebenes Kraftfahrzeug handeln, welches dazu eingerichtet ist, elektrische Energie während eines Ladevorgangs an ein anderes elektrisch angetriebenes Kraftfahrzeug zu übertragen und welches hierfür Energie bereitstellt.

Bei einer mobilen Bezugseinheit kann es sich beispielsweise um ein elektrisch angetriebenes Kraftfahrzeug handeln, welches dazu eingerichtet ist, elektrische Energie während eines Ladevorgangs von einem anderen elektrisch angetriebenen Kraftfahrzeug zu empfangen und welches Energie anfordert.

Die Angebotssignale und die Nachfragesignale können beispielsweise über ein Mobilfunknetz nach dem GSM-Standard übertragen werden. Ein Angebotssignal und/oder ein Nachfragesignal kann manuell durch einen Fahrer eingeleitet werden oder automatisch durch die Kraftfahrzeugelektronik.

Ein Zentralrechner kann beispielsweise ein Rechner mit einem Mikroprozessor oder ein Rechnerverbund sein.

Eine Kombination besteht aus jeweils einer mobilen Versorgereinheit und einer zugeordneten mobilen Bezugseinheit. Dabei wird zumindest auf Grundlage der Angebotssignale und der Nachfragesignale für jede Kombination ein Bewertungswert durch den Zentralrechner erstellt. Ein Bewertungswert beschreibt eine Effizienz eines mit einer solchen Kombinationen durchgeführten Ladevorgangs. Der Bewertungswert kann zur Auswahl von Kombinationen aus den möglichen Kombination verwendet werden. Dies kann beispielsweise mittels eines mathematischen Maximierungsansatzes erfolgen, wobei der Bewertungswert als jeweiliger Gewichtungsfaktor für die jeweilige Kombination verwendet wird. Die Auswahl der Kombinationen aus den möglichen Kombinationen kann dabei der Art erfolgen, dass die Kombinationen gewählt werden, welche zu einem Maximalwert des Bewertungswertes für das gesamte System führen.

Ein Energietransfervorgang beschreibt einen Prozess, zur Übertragung von Energie von einer Versorgereinheit zu einer Bezugseinheit. Zusätzlich zum eigentlichen Ladevorgang einer Bezugseinheit durch eine Versorgereinheit umfasst der Energietransfervorgang auch die Anfahrt einer Versorgereinheit und einer Empfängereinheit zu einem berechneten Treffpunkt, welcher von dem Zentralrechner mittels eines Koordinationssignals an beide Partner einer ausgewählten Kombination übermittelt werden kann. Dabei ist es vorgesehen, dass die Anfahrt und der Ladevorgang automatisiert durch beide Kraftfahrzeuge durchgeführt wird. Es kann sein, dass vor der Einleitung eines Energietransfervorgangs zumindest einer der Fahrer eines der beiden Kraftfahrzeuge die Einleitung des Energietransfervorgangs manuell bestätigen muss. Der Ladevorgang kann mittels einer Verwendung einer Ladekupplung durch die jeweiligen Kombinationspartner erfolgen. Dabei kann ein Energiespeicher der Versorgereinheit entladen und ein Energiespeicher der Versorgereinheit geladen werden. Es kann sein, dass die beiden Kombinationspartner während oder kurz vor dem Ladevorgang über die Ladekupplung kommunizieren. Es kann sein, dass dabei Parameter zur Durchführung des Ladevorgangs vereinbart werden, welche beispielsweise eine Ladeleistung oder eine aufnehmbare Energiemenge durch einen Energiespeicher umfassen. Somit können Schäden an Energiespeichern verhindert werden. Bevorzugt erfolgt der Ladevorgang mittels der Gleichstrom Schnelladetechnik (DC-Schnellladetechnik).

Eine Weiterbildung des Verfahrens sieht vor, dass die Angebotssignale und/oder die Nachfragesignale beabsichtigte und/oder mögliche Fahrrouten zu einem Fahrtziel umfassen, welche bei der Erstellung der möglichen Kombinationen und der jeweiligen Bewertungswerte eingesetzt werden. Mit anderen Worten übermitteln die Versorgereinheiten und die Empfängereinheiten die von ihnen geplanten und/oder für sie mögliche Fahrrouten zu einem Fahrtziel, welche dann von dem Zentralrechner zur Erstellung und Bewertung möglicher Kombinationen verwendet werden können. Beispielsweise kann ein Fahrer oder ein Autopilot festlegen, welches die bevorzugte Fahrroute zu einem Ziel ist und welche andere Fahrrouten zu dem Ziel zulässig sind. Es kann beispielsweise sein, dass die bevorzugte Fahrroute die Fahrroute mit der kürzesten Strecke ist und die möglichen Fahrrouten diejenigen Fahrrouten umfassen, welche ebenfalls zu dem Fahrtziel führen und deren zusätzliche Strecke unterhalb eines vom Fahrer oder vom Autopiloten definierten Wert liegen. Der Zentralrechner kann somit mögliche Kombinationen nicht nur aufgrund der aktuellen geographischen Position, sondern aufgrund beabsichtigter Fahrrouten bestimmen. Entsprechend kann bei der Bildung des Bewertungswertes berücksichtigt werden, ob zumindest einer der Partner eine andere Strecke, als seine geplante Strecke fahren muss. Dies kann die Bewertung verschlechtern. Dadurch ergibt sich der Vorteil, dass der Zentralrechner weiter im Voraus planen kann.

Eine Weiterbildung sieht vor, dass Daten zur aktuellen oder prognostizierten Verkehrssituationen mit den Fahrrouten und/oder möglichen Wegen zwischen einer Versorgungseinheit und einer Bezugseinheit zur Berechnung des Bewertungswertes verrechnet werden. Mit anderen Worten kombiniert der Zentralrechner die Fahrrouten der Kombinationspartner und/oder die möglichen Wege zwischen einer Versorgereinheit und einer Bezugseinheit mit aktuellen oder prognostizierten Verkehrssituationen, um daraus Bewertungswerte zu berechnen. Prognostizierte Verkehrssituationen können beispielsweise geplante Baustellen oder auf protokollierte Daten basierende Stauvorhersagen umfassen. Beispielsweise kann eine Kombination einen geringeren Bewertungswert aufweisen als eine Kombination mit einer gleichen Weglänge, wenn auf diesem Weg ein erhöhtes Verkehrsaufkommen vorliegt oder prognostiziert ist. Dadurch ergibt sich der Vorteil, dass die Wahrscheinlichkeit minimiert wird, dass ein zugeteilter Kombinationspartner aufgrund des Verkehrs verpasst wird.

Eine Weiterbildung sieht vor, dass die Angebotssignale und/oder die Nachfragesignale beabsichtigte und/oder zulässige Fahrzeiten umfassen, welche bei der Erstellung der möglichen Kombinationen und der jeweiligen bewertungswerte eingesetzt werden. Mit anderen Worten können Versorgereinheiten und Bezugseinheiten dem Zentralrechner mitteilen, welche Fahrzeiten beabsichtigt und/oder zulässig sind. Beispielsweise kann eine Versorgereinheit dem Zentralrechner eine Zeit mitteilen, wann sie spätestens am Zielort ankommen kann bzw. wie lang eine Fahrt höchstens dauern kann. Dadurch ergibt sich der Vorteil, dass sichergestellt werden kann, dass eine jeweilige Versorgereinheit und/oder Bezugseinheit aufgrund eines Ladevorgangs nicht nach einem zulässigen Zeitpunkt am Zielort ankommt.

Eine Weiterbildung sieht vor, dass die Angebotssignale und/oder die Nachfragesignale einen aktuellen Ladezustand umfassen, wobei der aktuelle Ladezustand bei der Erstellung der möglichen Kombinationen und der jeweiligen Bewertungswerte eingesetzt wird. Mit anderen Worten werden dem Zentralrechner die aktuellen Ladezustände übermittelt, sodass er diese nutzen kann, um mögliche Kombinationen zu bestimmen und/oder die Notwendigkeit eines Ladezustands bei der Berechnung des Bewertungswertes zu berücksichtigen. So kann die Berechnung des Bewertungswertes der Art erfolgen, dass Kraftfahrzeugen mit einem geringen Ladezustand ein höherer Bewertungswert zugewiesen werden kann. Somit ist es möglich, diese zu Überpriorisieren. Dadurch ergibt sich der Vorteil, dass eine Zuteilung nach Notwendigkeit erfolgen kann.

Eine Weiterbildung sieht vor, dass die Angebotssignale und/oder die Nachfragesignale eine benötigte Tagesreichweite umfassen, wobei die benötigte Tagesreichweite bei der Erstellung der möglichen Kombinationen und der jeweiligen Bewertungswerte eingesetzt wird. Mit anderen Worten können die Einheiten eine benötigte Tagesreichweite an den Zentralrechner übermitteln, sodass dieser diese Werte bei der Erstellung der möglichen Kombinationen und der jeweiligen Bewertungswerte berücksichtigt. Beispielsweise kann es sein, dass eine an den Zentralrechner übermittelte Route nur ein Teilstück umfasst, oder am selben Tag eine Rückfahrt geplant ist. Dadurch ergibt sich der Vorteil, dass eine Zuteilung nicht nur aufgrund einer aktuellen Fahrroute, sondern aufgrund einer geplanten Fahrroute erfolgen kann.

Eine Weiterbildung sieht vor, dass die Versorgereinheiten und die Bezugseinheiten zumindest während eines Energietransfervorgangs automatisiert gesteuert werden. Mit anderen Worten wird zumindest während eines Austauschvorgangs die Steuerung des Kraftfahrzeugs durch einen Autopiloten übernommen, welche die beiden Kombinationspartner zusammenführt. Dadurch ergibt sich der Vorteil, dass eine zuverlässige Zusammenführung der beiden Kombinationspartner ermöglicht wird.

Eine Weiterbildung des Verfahrens sieht vor, dass der Energietransfervorgang zwischen der Versorgereinheit und der jeweiligen Bezugseinheit mittels eines Versorgungsfahrzeugs erfolgt. Die Versorgereinheit, die Bezugseinheit und das Versorgungsfahrzeug erhalten dabei das jeweilige Koordinationssignal von dem Zentralrechner. Zuerst wird ein Energietransfervorgang zur Übertragung von Energie von der Versorgereinheit an das Versorgungsfahrzeug durchgeführt. Im nächsten Schritt wird ein Energietransfervorgang zur Übertragung von Energie von dem Versorgungsfahrzeug an die Bezugseinheit durchgeführt. Mit anderen Worten erfolgt kein direkter Energietransfervorgang zur Übertragung von Energie von der Versorgereinheit zu der Bezugseinheit, sondern die Übertragung der Energie erfolgt indirekt mittels eines Versorgungsfahzeugs, welches als Bindeglied wirkt. Ein Versorgungsfahrzeug kann somit beispielsweise im Fall eines momentanen Überangebots an elektrischer Energie seinen Energiespeicher aufladen, wodurch das Versorgungsfahrzeug keine Ladestation anfahren muss. Dadurch ergibt sich der Vorteil, dass das Fahrzeug sein Wirkungsgebiet, welches beispielsweise eine Autobahn sein kann, nicht für jeden Ladevorgang verlassen muss.

Eine Weiterbildung des Verfahrens sieht vor, dass Abrechnungsdaten in dem Zentralrechner gespeichert sind, die den jeweiligen Bezugseinheiten und den jeweiligen Versorgereinheit zugeordnet sind und deren jeweilige Werte nach einem Energietransfervorgang zwischen einer Versorgereinheit und einer Bezugseinheit geändert werden. Mit anderen Worten werden die übertragenen Energiemengen in dem Zentralrechner abgerechnet. Es kann beispielsweise möglich sein, dass je nach Angebot und Nachfrage ein bestimmter Energiewert festgelegt wird oder dass Versorgereinheiten und Bezugseinheiten individuelle Preise festlegen. Es kann insbesondere sein, dass der Energiepreis steigt, wenn eine Bezugseinheit einen sehr dringenden Energiebedarf hat und aus diesem Grund einen höheren Bewertungswert zugeteilt bekommt. Dadurch ergibt sich der Vorteil, dass das Verfahren wirtschaftlich betrieben werden kann.

Zu der Erfindung gehört auch ein Versorgungsfahrzeug, welches dazu eingerichtet ist, Angebotssignale und/oder Nachfragesignale an den Zentralrechner zu übertragen und Koordinationssignale des Zentralrechners zu empfangen. Das Versorgungsfahrzeug ist dazu eingerichtet, mit einem Autonomiegrad der Stufe 5 automatisiert zu fahren. Das Versorgungsfahrzeug umfasst einen Energiespeicher mit einem Energiespeichervermögen von mindestens 100 kWh und weist im Heckbereich und/oder im Frontbereich eine jeweilige Ladungskupplung auf, welche dazu eingerichtet ist einen Ladevorgang und einen Kommunikationsvorgang mit einem anderen Fahrzeug während des Fahrbetriebs herzustellen. Die Ladekupplung ist dazu eingerichtet mittels eines Gleichstromschnellladeverfahrens Energie mit einer Leistung von mindestens 100 kW während eines Energieaustausch zu übertragen.

Ein Autonomiegrad der Stufe 5 bedeutet, dass das Versorgungsfahrzeug in der Lage ist, ohne ein menschliches Eingreifen fahren und am Straßenverkehr teilnehmen kann. Ein Energiespeicher kann beispielsweise ein Akkumulator sein, welcher ein Energiespeichervermögen von mindestens 100 kWh umfassen kann. Es kann vorgesehen sein, dass für die Versorgungsfahrzeuge spezielle Ladestation eingerichtet werden, welche bevorzugt in der Nähe von Autobahnen errichtet werden und einen Abstand von maximal 200 km voneinander aufweisen.

Die Erfindung umfasst auch ein elektrisch betriebenes Kraftfahrzeug welches dazu eingerichtet ist, mindestens mit einem Autonomiegrad der Stufe 3 autonom zu fahren. Das elektrisch betriebene Kraftfahrzeug zeichnet sich dadurch aus, dass es dazu eingerichtet ist, Angebotssignale und/oder Nachfragesignale an den Zentralrechner zu übertragen und zugeordnete Koordinationssignale von dem Zentralrechner zu empfangen. Das Kraftfahrzeug weist im Heckbereich und/oder im Frontbereich eine jeweilige Ladekupplung auf, welche dazu eingerichtet ist, einen Energieaustausch und eine Kommunikationsverbindung mit einem anderen Fahrzeug während des Fahrbetriebs herzustellen, wobei die Ladekupplung dazu eingerichtet ist, mittels eines Gleichstromschnellladeverfahrens eine Leistung von mindestens 100 kW während eines Energieaustausch zu übertragen. Ein Autonomiegrad der Stufe 3 bedeutet, dass das Kraftfahrzeug dazu eingerichtet ist hoch automatisiert fahren zu können. Bevorzugt ist es vorgesehen, dass das Kraftfahrzeug einen Autonomiegrad der Stufe 4 aufweist und somit zum vollautomatisierten Fahren ausgelegt ist. Das elektrisch betriebene Kraftfahrzeug kann der Art ausgelegt sein, dass es als mobile Bezugseinheit und/oder mobile Versorgereinheit wirken kann. Dadurch ergibt sich der Vorteil, dass Versorgungsvorgänge nicht nur durch dafür vorgesehene Versorgungsfahrzeuge durchgeführt werden können, wodurch die Anzahl von potentiellen mobilen Versorgereinheiten erhöht wird.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigen:
- Fig. 1: einen schematischen Verlauf des Verfahrens,
- Fig. 2: schematisch die Interaktion zwischen den Teilnehmern des Verfahrens,
- Fig. 3: ein elektrisch angetriebenes Kraftfahrzeug, und
- Fig. 4: ein Versorgungsfahrzeug.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

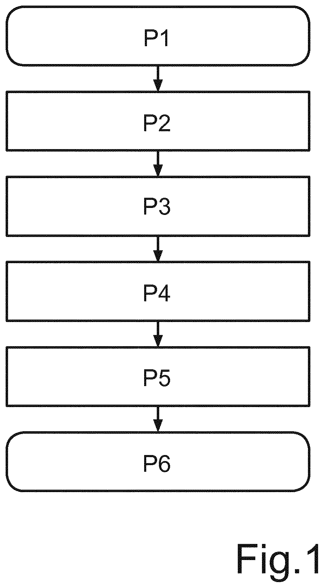

Fig.1 zeigt schematisch den Verlauf des Verfahrens. Das Verfahren beginnt mit der Übermittlung P1 eines jeweiligen Angebotssignals S1, umfassend zumindest Daten über eine bereitgestellte Energiemenge und eine aktuelle geographische Position, von mobilen Versorgereinheiten 1 an einen Zentralrechner 2. Die Übertragung der Signale kann beispielsweise über ein GSM-Netz erfolgen. Das jeweilige Angebotssignal S1 kann auch weitere Daten umfassen. Dazu können beispielsweise beabsichtigte und/oder mögliche Fahrrouten zu einem Fahrtziel, beabsichtigte und/oder zulässige Fahrzeiten, ein aktueller Ladezustand oder eine benötigte Tagesreichweite gehören. Ein jeweiliges Angebotssignal S1 kann einmalig oder permanent ausgesandt werden. Eine mobile Versorgereinheit kann beispielsweise ein elektrisch betriebenes Kraftfahrzeug mit zumindest einer Ladekupplung 4 sein oder ein Versorgungsfahrzeug mit zumindest einer Ladekupplung 5. In einem zweiten Schritt kann ein jeweiliges Nachfragesignal S2 , welches zumindest Daten über eine angeforderte Energiemenge und eine aktuelle geographische Position umfasst, von mobilen Bezugseinheiten 3 an den Zentralrechner 2 übertragen werden P2. Eine mobile Bezugseinheiten kann beispielsweise ein elektrisch betriebenes Kraftfahrzeug mit zumindest einer Ladekupplung 4 sein oder ein Versorgungsfahrzeug mit zumindest einer Ladekupplung 5. Das jeweilige Nachfragesignal S2 kann auch weitere Daten umfassen. In dem nächsten Schritt werden zumindest auf Grundlage der Angebotssignale S1 und der Nachfragesignale S2 mögliche Kombinationen, bestehend aus jeweils einer Versorgereinheit 1 und einer Bezugseinheit 3, zusammen mit einem jeweiligen Bewertungswert durch den Zentralrechner 2 erstellt P3. Mit möglichen Kombinationen sind alle theoretisch möglichen Kombinationen zwischen einer mobilen Versorgereinheit 1 und einer mobilen Bezugseinheit 3 gemeint. Zu jeder einzelnen Kombination kann ein Bewertungswert berechnet werden, welcher einen Effizienzwert der Kombination beschreibt. Die Berechnung kann zumindest auf Grundlage der Angebotssignale S1 und der Nachfragesignale S2 erfolgen. Es können auch weitere Daten mit einbezogen werden, wozu beispielsweise Daten zur aktuellen oder prognostizierten Verkehrssituation mit den Fahrrouten und/oder möglichen Wegen zwischen einer Versorgereinheit 1 und einer Bezugseinheit 3 gehören können. Der Bewertungswert kann mittels einer Optimierungsmethode verwendet werden, um Kombinationen auszuwählen P4. Bei der Optimierungsmethode kann es sich beispielsweise um ein Maximierungsverfahren handeln, welches eine Wahl der Kombinationen ermöglicht, welche zu einem maximalen Bewertungswert des Gesamtsystems führt. Dabei wird der Tatsache Rechnung getragen, dass es nicht möglich ist, eine für jeden einzelnen Kombinationspartner 1,3 optimale Kombination zu wählen. Den jeweiligen Versorgereinheiten 1 und den jeweiligen Bezugseinheiten 3 werden die ausgewählten Kombinationen mittels eines Koordinationssignals S3 durch den Zentralrechner 2 übermittelt P5. Ein Koordinationssignal S3 kann Daten über den zugeteilten Kombinationsspartner 1,3, einen Preis für den Energietransfervorgang, einen geographischen und zeitlichen Treffpunkt mit dem Kombinationsspartner, einen Weg, eine zu fahrende Geschwindigkeit, die zu übertragene Energiemenge und weitere Informationen umfassen. Nach dem Empfang der Koordinationssignale S3 können die jeweiligen Versorgereinheiten 1 und die jeweiligen Bezugseinheiten 3 einen Energietransfervorgang gemäß der ausgewählten Kombinationen einleiten P6. Es kann sein, dass für die Einleitung des Energietransfervorgangs eine Zustimmung durch einen Autopiloten oder einen Fahrer zumindest eines der Kombinationsspartner 1,3 erforderlich ist. So kann beispielsweise vor der Einleitung eines Energietransfervorgangs eine Übersicht über den Preis, die Energiemenge, den Weg und andere Werte angezeigt werden. Mit einem Energietransfervorgang ist nicht nur der reine Austausch von Energie im Rahmen eines Ladevorgangs gemeint, sondern es kann beispielsweise auch der Anfahrtsweg durch diesen Begriff abgedeckt sein. Es kann sein, dass die Versorgereinheiten 1 und die Bezugseinheiten 3 zumindest während des Energietauschvorgangs automatisiert gesteuert werden. Dadurch ergibt sich der Vorteil, dass eine bessere zeitliche und örtliche Kombination der Kombinationspartner 1,3 ermöglicht wird. Es kann sein, dass es effizienter ist, einen Ladevorgang mit drei Partnern durchzuführen. In diesem Fall erfolgt keine direkte Energieübertragung von der ausgehenden mobilen Versorgereinheit 1 zu der letztendlichen Empfängereinheit 3, sondern es wird ein Partner zwischengeschaltet, welcher für die ausgehende mobile Versorgereinheit 1 als mobile Empfängereinheit 3 wirkt und für die letztendliche mobile Empfängereinheit 3 als mobile Versorgereinheit 1. Mit anderen Worten erfolgt der Energietransfervorgang mittels zweier kombinierter Energietransfervorgänge. Bevorzugt aber nicht ausschließlich kann es sich um ein Versorgungsfahrzeug 5 handeln, welches zwischengeschaltet ist.

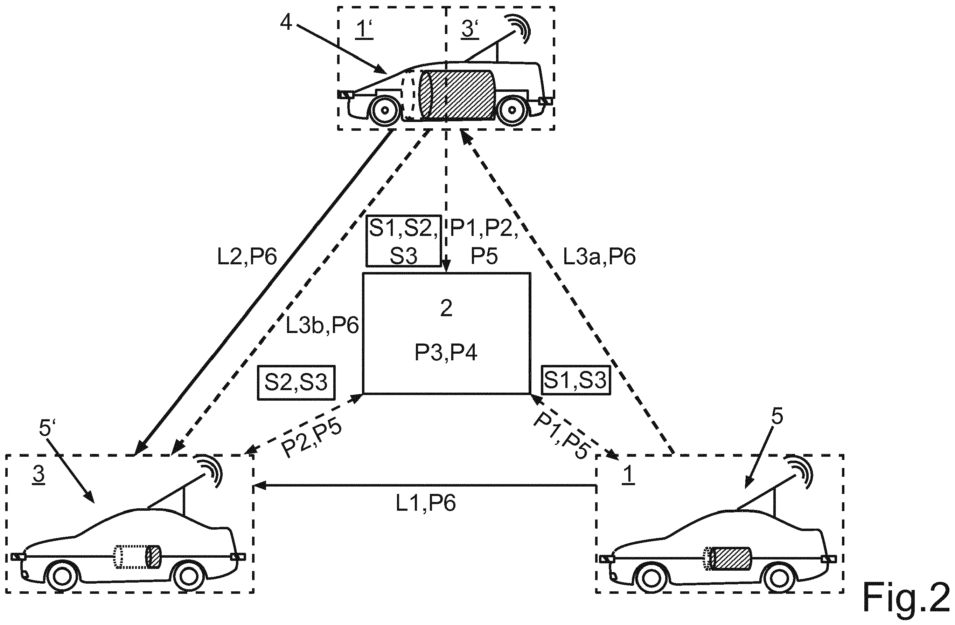

Figur 2 zeigt schematisch die möglichen Interaktionen zwischen den elektrisch betriebenen Kraftfahrzeugen 4,5,5' und dem Zentralrechner 2. Die teilnehmenden Kraftfahrzeuge 4,5,5' können Angebotssignale S1 und/oder Nachfragesignale S2 an den Zentralrechner 2 übermitteln und Koordinationssignale S3 von dem Zentralrechner 2 empfangen. In der Figur sind mögliche Kombinationen von Energietransfervorgängen L1, L2, L3a, L3b gezeigt. Es kann sein, dass aufgrund der übermittelten Anfragesignale S2 und der übermittelten Angebotssignale S1 ein Bewertungswert für eine Kombination aus einem geladenen elektrisch angetriebenen Kraftfahrzeug 5 und einem leeren elektrisch angetriebenen Kraftfahrzeug 5' gewählt wird. In diesem Fall übermittelt der Zentralrechner 2 Koordinationssignale S3 an das elektrisch betriebene Kraftfahrzeugen 5 welches als mobile Versorgereinheit 1 wirken kann und das elektrisch betriebene Kraftfahrzeugen 5', welches als mobile Bezugseinheit 3 wirken kann. Daraufhin können die beiden elektrisch betriebenen Kraftfahrzeuge 5,5' einen Energietransfervorgang P6 einleiten. In diesem Fall L1 wird Energie direkt von einem elektrisch angetriebenen Kraftfahrzeug 5 zu einem anderen elektrisch angetriebenen Kraftfahrzeug 5' übertragen. Es kann auch sein, dass eine Kombination aus einem Versorgungsfahrzeug 4 und einem elektrisch angetriebenen Kraftfahrzeug 5' von einem Zentralrechner 2 ausgewählt werden kann. In diesem Fall L2 wirkt das Versorgungsfahrzeug 5 als mobile Versorgereinheit 1 und das elektrisch angetriebene Kraftfahrzeug 5' als mobile Bezugseinheit 3. Es kann auch sein, dass eine Zwischenschaltung eines Versorgungsfahrzeugs 4 ausgewählt wird. In diesem Fall übermittelt der Zentralrechner 2 Koordinationssignale S3 an ein erstes elektrisch angetriebenes Kraftfahrzeug 5, das Versorgungsfahrzeug 4 und das letztendliche elektrisch angetriebene Kraftfahrzeug 5'. Ein erster Energietransfervorgang P6 verläuft in diesem Fall zwischen der anfänglichen mobilen Versorgereinheit 1 und dem Versorgungsfahrzeug 4, welches in diesem Teilschritt L3a als mobile Bezugseinheit 3' wirkt. Im nächsten Teilprozess L3b kann das Versorgungsfahrzeug 4 als mobile Versorgereinheit 1' und das letztendliche elektrisch angetriebene Kraftfahrzeug 5' als mobile Empfängereinheit 3 wirken, wobei Energie von dem Versorgungsfahrzeug 4 an die letztendliche mobile Bezugseinheit 3 übertragen werden kann.

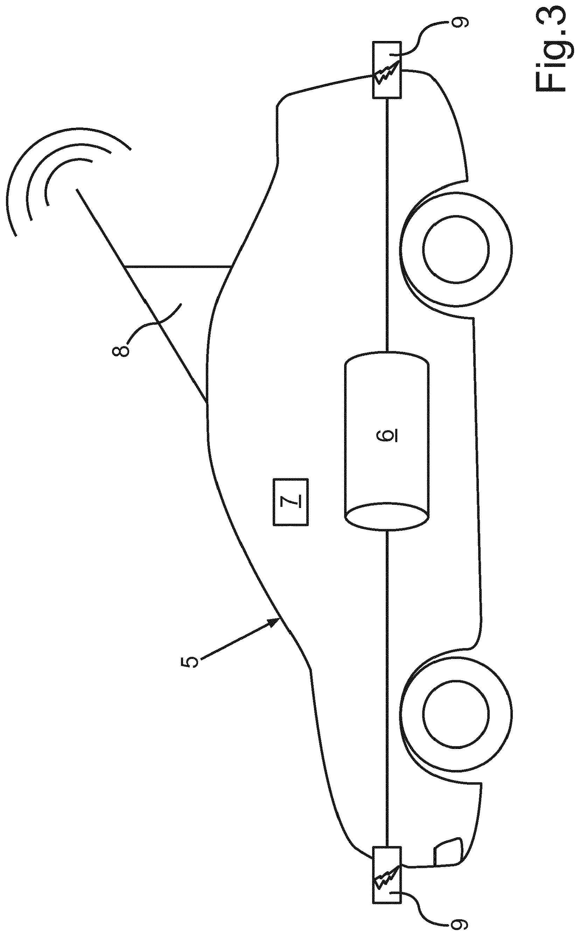

Fig. 3 zeigt ein elektrisch angetriebenes Kraftfahrzeug 5, welches einen Energiespeicher 6, eine Steuereinheit 7 für einen Autopiloten, eine Kommunikationseinheit 8 und zwei Ladekupplungen 9 umfassen kann, welche sich jeweils an der Front und an der Heckseite des Kraftfahrzeugs befinden. Die Steuereinheit 7 kann der Art eingerichtet sein, dass ein automatisiertes Fahren des Autonomiegrads-Level 3 oder 4 möglich sein kann. Die Ladekupplungen kann dazu eingerichtet sein, eine Leistung von mindestens 100 kW mittels eines Gleichstrom Schnellladeverfahrens zu übertragen. Die Ladekupplung kann ebenfalls dazu eingerichtet sein, mit dem Kombinationspartner während eines Ladevorgangs zu kommunizieren. Dadurch kann ein Überladen eines Energiespeichers 6 verhindert werden. Die Kommunikationseinheit 8 kann der Art eingerichtet sein, dass eine Kommunikation mit dem Zentralrechner 2 möglich ist.

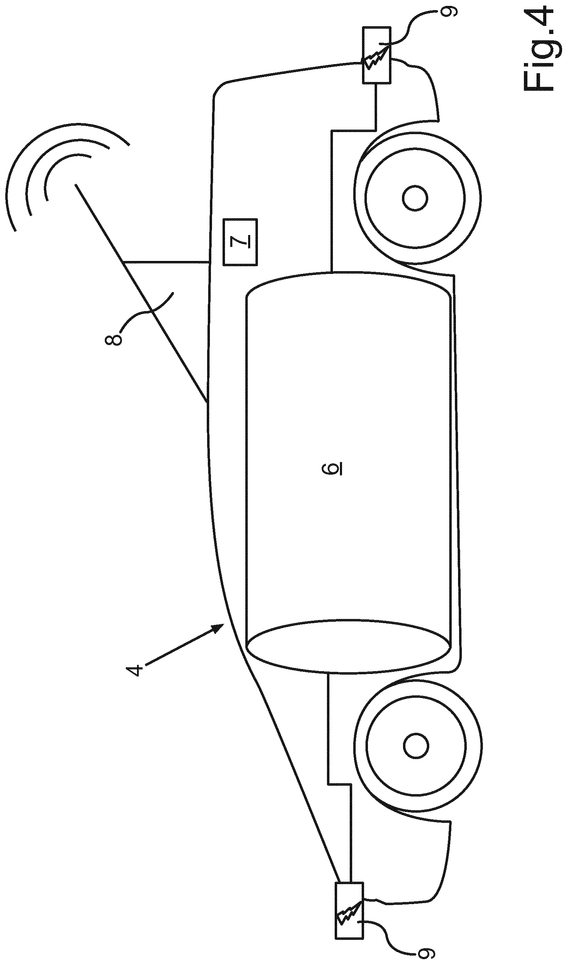

Fig. 4 zeigt ein Versorgerfahrzeug 4, welches einen Energiespeicher 6, eine Steuereinheit 7 für einen Autopiloten, eine Kommunikationseinheit 8, und zwei Ladekupplungen 9 umfassen kann, welche sich jeweils an der Front- und an der Heckseite des Versorgerfahrzeugs 4 befinden. Die Steuereinheit 7 kann der Art eingerichtet sein, dass ein automatisiertes Fahren des Autonomiegrads-Level 5 möglich ist. Die Kommunikationseinheit 8 kann der Art eingerichtet sein, dass eine Kommunikation mit dem Zentralrechner 2 möglich ist. Die Ladekupplung 9 kann dazu eingerichtet sein, eine Leistung von mindestens 100 kW mittels eines Gleichstrom Schnellladeverfahrens zu übertragen. Die Ladekupplung kann ebenfalls dazu eingerichtet sein, mit dem Kombinationspartner während eines Ladevorgangs zu kommunizieren. Dadurch kann ein Überladen eines Energiespeichers 6 verhindert werden. Der Energiespeicher 6 weist bevorzugter Weise ein Energiespeichervermögen von mindestens 100 kWh auf.

Insgesamt zeigen die Beispiele, wie durch die Erfindung ein Verfahren zum Koordinieren eines Ladesystems zum mobilen Laden von elektrisch angetriebenen Kraftfahrzeugen zur Verfügung gestellt wird.

## Patentansprüche

1. Verfahren zur Koordination von Ladevorgängen von Elektrofahrzeugen, **dadurch gekennzeichnet, dass**
a. ein jeweiliges Angebotssignal (S1), umfassend zumindest Daten über eine bereitgestellte Energiemenge und eine aktuelle geografische Position, aus mobilen Versorgereinheiten (1) durch einen Zentralrechner (2) empfangen wird (P1),
b. ein jeweiliges Nachfragesignal (S2), umfassend zumindest Daten über eine angeforderte Energiemenge und eine aktuelle geografische Position, aus mobilen Bezugseinheiten (3) durch den Zentralrechner empfangen wird (P2),
c. zumindest auf Grundlage der Angebotssignale (S1) und der Nachfragesignale (S2) mögliche Kombinationen, bestehend aus jeweils einer Versorgereinheit (1) und einer Bezugseinheit (3), zusammen mit einem jeweiligen Bewertungswert durch den Zentralrechner (2) erstellt werden (P3),
d. Kombinationen unter Einbeziehung ihres jeweiligen Bewertungswertes mittels einer Optimierungsmethode ausgewählt werden (P4),
e. den jeweiligen Versorgereinheiten (1) und den jeweiligen Bezugseinheiten (3) der ausgewählten Kombinationen mittels eines Koordinationssignals (S3) ihre jeweilige ausgewählte Kombination und Daten bezüglich eines Energietransfervorgangs übertragen wird (P5),
f. durch die jeweiligen Versorgereinheiten (1) und die jeweiligen Bezugseinheiten (3) der ausgewählten Kombinationen der Energietransfervorgang gemäß der Daten der Koordinationssignale (S3) eingeleitet wird (P6).

2. Verfahren nach Anspruch (1), **dadurch gekennzeichnet, dass** die Angebotssignale (S1) und/oder die Nachfragesignale (S2) geplante und/oder mögliche Fahrrouten zu einem Fahrziel umfassen, welche bei der Erstellung der möglichen Kombinationen und der jeweiligen Bewertungswerte berücksichtigt werden.

3. Verfahren nach einem der vorhergehenden Ansprüche, **dadurch gekennzeichnet, dass** Daten zu einer aktuellen oder prognostizierten Verkehrssituation mit den Fahrrouten und/oder möglichen Wegen zwischen zumindest einer der Versorgereinheiten (1) und zumindest einer der Bezugseinheiten (3) zur Berechnung des jeweiligen Bewertungswertes verrechnet werden.

4. Verfahren nach einem der vorhergehenden Ansprüche, **dadurch gekennzeichnet, dass** die Angebotssignale (S1) und/oder die Nachfragesignale (S2) geplante und/oder zulässige Fahrzeiten umfassen, welche bei der Erstellung der möglichen Kombinationen und der jeweiligen Bewertungswerte berücksichtigt werden.

5. Verfahren nach einem der vorhergehenden Ansprüche, **dadurch gekennzeichnet, dass** die Angebotssignale (S1) und/oder die Nachfragesignale (S2) einen aktuellen Ladezustand umfassen, wobei der aktuelle Ladezustand bei der Erstellung der möglichen Kombinationen und der jeweiligen Bewertungswerte berücksichtigt wird.

6. Verfahren nach einem der vorhergehenden Ansprüche, **dadurch gekennzeichnet, dass** die Angebotssignale (S1) und/oder die Nachfragesignale (S2) eine benötigte Tagesreichweite umfassen, wobei die benötigte Tagesreichweite bei der Erstellung der möglichen Kombinationen und der jeweiligen Bewertungswerte berücksichtigt wird.

7. Verfahren nach einem der vorhergehenden Ansprüche, **dadurch gekennzeichnet, dass** der Energietransfervorgang (P6) zwischen der Versorgereinheit (1) und der jeweiligen Bezugseinheit (3) mittels eines Versorgungsfahrzeugs (4) erfolgt, wobei
a. die Versorgereinheit (1), die Bezugseinheit (3) und das Versorgungsfahrzeug (5) das jeweiliges Koordinationssignal (S3) von dem Zentralrechner (2) erhalten,
b. die Versorgereinheit (1) und das Versorgungsfahrzeug (4) einen Energietransfervorgang zur Übertragung von Energie von der Versorgereinheit (1) an das Versorgungsfahrzeug (4) durchführen,
c. das Versorgungsfahrzeug (4) und die Bezugseinheit (3) einen Energietransfervorgang (P6) zur Übertragung von Energie von dem Versorgungsfahrzeug (4) an die Bezugseinheit (3) durchführen.

8. Verfahren nach einem der vorhergehenden Ansprüche, **dadurch gekennzeichnet, dass** Abrechnungsdaten in dem Zentralrechner (2) gespeichert sind, die den jeweiligen Bezugseinheiten und den jeweiligen Versorgereinheiten zugeordnet sind und deren jeweilige Werte nach einem Energietransfervorgang (P6) zwischen Bezugseinheiten (3) und Versorgereinheiten (1) geändert werden.

9. Versorgungsfahrzeug (4)
**dadurch gekennzeichnet, dass**
a. das Versorgungsfahrzeug (4) dazu eingerichtet ist, Angebotssignale (S1) und/oder Nachfragesignale (S2) an den Zentralrechner (2) zu übertragen,
b. ein, das Versorgungsfahrzeug (4) betreffendes Kombinationssignal (S3) von dem Zentralrechner (2) zu empfangen,
c. das Versorgungsfahrzeug (4) dazu eingerichtet ist, mit einem Autonomiegrad der Stufe 5 automatisiert zu fahren,
d. das Versorgungsfahrzeug (4) einen Energiespeicher (6) mit einem Energiespeichervermögen von mindestens 100kWh umfasst,
e. das Versorgungsfahrzeug (4) im Heckbereich und/oder im Frontbereich eine jeweilige Ladekupplung (9) aufweist, welche dazu eingerichtet ist, einen Energieaustausch und eine Kommunikationsverbindung mit einem anderen Fahrzeug während des Fahrbetriebs herzustellen, wobei
f. die Ladekupplung (9) dazu eingerichtet ist, mittels eines Gleichstromschnelladeverfahrens eine Leistung von mindestens 100 kW während eines Energieaustauschs zu übertragen.

10. Elektrisch betriebenes Kraftfahrzeug (5), welches dazu eingerichtet ist, mindestens mit einem Autonomiegrad der Stufe 3 autonom zu fahren, **dadurch gekennzeichnet, dass**
a. das elektrisch betriebene Kraftfahrzeug (5) dazu eingerichtet ist, Angebotssignale (S1) und/oder Nachfragesignale (S2) an einen Zentralrechner (2) zu übertragen,
b. ein das elektrisch betriebene Kraftfahrzeug (5) betreffendes Koordinationssignal (S3) von dem Zentralrechner (2) zu empfangen,
c. das Kraftfahrzeug (5) jeweils im Heckbereich und/oder im Frontbereich eine Ladekupplung (9) aufweist, welche dazu eingerichtet ist, einen Energieaustausch und eine Kommunikationsverbindung mit einem anderen Fahrzeug während des Fahrbetriebs herzustellen, wobei
d. die Ladekupplung (9) dazu eingerichtet ist, mittels eines Gleichstromschnelladeverfahrens eine Leistung von mindestens 100 kW während eines Energieaustauschs zu übertragen.
